# EUROPÄISCHE PATENTSCHRIFT

(11) **EP 1 595 687 B1**
(45) Veröffentlichungstag und Bekanntmachung des Hinweises auf die Patenterteilung: **09.05.2007**
(21) Anmeldenummer: 04008931.0
(22) Anmeldetag: 15.04.2004
(51) Int. Cl.: B29C 70/46, B29C 70/48, B29C 70/54

(54) **Verfahren und Vorrichtung zur Herstellung eines faserverstärkten Bauteils**
Method and apparatus for manufacturing a fibre reinforced product
Procédé et dispositif pour la fabrication d'une pièce renforcée par des fibres

(43) Veröffentlichungstag der Anmeldung: 16.11.2005
(73) Patentinhaber: Deutsches Zentrum für Luft- und Raumfahrt e.V., 51147 Köln (DE)
(72) Erfinder: Hausmann, Joachim, Dr.-Ing., 50670 Köln (DE); Schumann, Hartmut, 53819 Neunkirchen-Seelscheid (DE)
(74) Vertreter: Selting, Günther

(56) Entgegenhaltungen:
- US-A- 5 348 026
- US-A1- 2004 065 044
- PATENT ABSTRACTS OF JAPAN Bd. 0130, Nr. 14 (M-784), 13. Januar 1989 (1989-01-13) & JP 63 224930 A (DAIDO STEEL CO LTD), 20. September 1988 (1988-09-20)

## Beschreibung

Die Erfindung betrifft ein Verfahren und eine Vorrichtung zur Herstellung eines faserverstärkten rotationssymmetrischen stabförmigen Bauteils.

Es ist bekannt, faserverstärkte Bauteile herzustellen, die sich durch ein geringes Gewicht und hohe mechanische Festigkeit auszeichnen. Das Faserverstärkungsmaterial besteht zweckmäßigerweise aus mit einem Matrixmaterial beschichteten Fasern.

In DE 4 335 557 C1 ist ein Verfahren zur Herstellung von Bauteilen aus mit Siliziumcarbidfasern verstärkten Titanlegierungen beschrieben. Hier werden die mit dem metallischen Matrixmaterial beschichteten Einzelfasern in einem Formhohlraum verpresst.

DE 19 811 397 C1 (DLR) beschreibt eine Vorrichtung, bei der ein rotationssymmetrisches rohrförmiges Werkstück mit Fasern belegt wird, die entweder das Werkstück schraubenförmig umgeben oder in Längsrichtung verlaufen. Die Fasern sind von einem Matrixmaterial umhüllt. Nach dem Anbringen der Faserlagen auf das Werkstück wird das Werkstück einem heißisostatischen Pressvorgang unterzogen, bei dem sich die Matrixmaterialien der Fasern verbinden. Auf diese Weise können Rohre hergestellt werden, die mechanisch und thermisch hochbelastbar sind. Solche Rohre eignen sich beispielsweise für Antriebswellen in Leichtbauweise, als Strukturbauteile zur Übertragung von Kräften oder als Rohrleitung für das Befördern gasförmiger oder flüssiger Medien oder als Druckbehälter, Träger oder Zylinder.

Die Herstellung einer schraubenförmigen Faserstruktur erfordert das Aufwickeln von Einzelfasern auf einen Dorn. Dabei muss jede Faser auf dem Dorn abgelegt und mit Schweißpunkten fixiert werden. Dies ist ein sehr aufwendiger Vorgang.

Bei Bauteilen, die kombinierten Schub-, Torsions- oder Innendruckbelastungen oder radialen Belastungen ausgesetzt sind, ergibt sich eine ideale Faserausrichtung, die von der Rotationsachse des Bauteils abweicht. In vielen Fällen liegt der ideale Faserwinkel zwischen 5° und 70°.

Ein Verfahren, von dem der Oberbegriff des Patentanspruchs 1 ausgeht, ist bekannt aus US-A-5,348,026. Das bekannte Verfahren dient zur Herstellung einer Knochenschraube mit hohem Widerstand gegen das Einschraubmoment. Eine Vielzahl von Verstärkungsfasern wird in eine Form eingebracht, die einen langgestreckten Formkanal mit Schraubenprofil aufweist. Die Form gemäß dem Oberbegriff des Anspruchs 10 mit den darin festgelegten oberen Enden der Fasern wird anschließend gedreht, so dass das Faserbündel schraubenförmig verwunden wird. Danach wird der das Faserbündel umgebende Formhohlraum mit einer Polymermasse ausgegossen, die später das Gewinde bildet.

Das Dokument PATENT ABSTRACTS OF JAPAN Bd. 0130, Nr. 14 (M-784), 13. Januar 1989 (1989-01-13) & JP 63 224930 A (DAIDO STEEL CO LTD), 20. September 1988 (1988-09-20) beschreibt die Herstellung einer Schraube durch Einbringen eines Faserbündels aus längslaufenden Fasern in ein Formwerkzeug das eine Negativform der herzustellenden Schraube bildet. Das Faserbündel ist mit Nylonpulver imprägniert. Ein Stempel übt eine axiale Kraft auf das Faserbündel aus, das in Längsrichtung komprimiert wird, wodurch die Fasern gestaucht und mäanderförmig verformt werden.

US 2004/065044 A1 beschreibt einen Bewehrungsstab für mineralische Baumaterialien wie Zement. Der Bewehrungsstab besteht aus faserverstärktem Kunststoff mit einem zentralen langgestreckten Kern, von dem Rippen seitlich abstehen. Die Rippen haben schraubenförmigen Verlauf. Die Herstellung des Stabes erfolgt durch Verformung des vorimprägnierten Fasermaterials zwischen Walzen oder Rollen. Das Fasermaterial kann auch durch entsprechende Düsen gezogen werden.

Der Erfindung liegt die Aufgabe zugrunde, ein Verfahren und eine Vorrichtung zur Herstellung eines faserverstärkten rotationssymmetrischen stabförmigen Bauteils anzugeben, um eine Vereinfachung des Herstellungsvorgangs unter gleichzeitiger Verbesserung der strukturellen Eigenschaften des Bauteils zu erreichen.

Das erfindungsgemäße Verfahren ist durch den Patentanspruch 1 definiert und die Vorrichtung durch den Patentanspruch 10.

Erfindungsgemäß wird ein Faserbündel aus zahlreichen Fasern in einen langgestreckten Formhohlraum eingebracht, wobei die Fasern zunächst axial zu dem Formhohlraum ausgerichtet werden. Danach erfolgt ein schraubenförmiges Verwinden des Faserbündels unter Verkleinerung des axialen Abstandes der Enden des Faserbündels, wodurch die seitlichen Abstände der Fasern verringert werden. Anschließend erfolgt ein isostatisches Verpressen der Fasern zusammen mit einem Matrixmaterial in dem Formhohlraum.

Dadurch dass ein ganzes Faserbündel in den Formhohlraum eingebracht wird, ist die Verlegung und Fixierung von Einzelfasern nicht erforderlich. Das Verfahren ist daher weniger zeitaufwendig. Die Fasern werden zunächst in axialer Ausrichtung vorzugsweise senkrecht aufgestellt, so dass sie frei aufragen und sich ohne äußeren Zwang frei vertikal ausrichten. Durch das schraubenförmige Verwinden des Faserbündels unter gleichzeitiger Verkürzung der Länge des Faserbündels wird der seitliche Faserabstand verringert. Das Faserbündel wird also einer Vorkompaktierung ausgesetzt. Dadurch werden alle im Bauteil befindlichen Fasern in einem Arbeitsgang im gewünschten Winkel ausgerichtet. Erreicht wird dies durch das Ausnutzen der Neigung der Faser, einer Druckbeanspruchung durch seitliches Wegkippen auszuweichen. Zudem kann das Kippen der Fasern in die gewünschte Lage durch tangentiale Relativbewegung der Druckübertragungselemente an den Faserenden unterstützt werden.

Bei dem erfindungsgemäßen Verfahren werden die Fasern zunächst durch die schraubenförmige Verformung des Faserbündels aneinander angenähert und ggf. in gegenseitigen Kontakt gebracht. Das auf diese Weise vorkompaktierte Faserbündel wird während des isostatischen Pressvorganges vorzugsweise unter zusätzlicher Wärmeeinwirkung verpresst.

Als Faserwerkstoff eignen sich besonders Fasern aus Keramik, Metall, Polymer, Kohlenstoff oder Glas mit einem Durchmesser zwischen 4 und 500 µm und einer Länge, die mindestens dem 100-fachen des Durchmessers entspricht. Vorzugsweise sind die Fasern in eine Matrix eingebettet. Hierbei kann es sich um ein Polymer, Metall oder eine Keramik handeln. Das Matrixmaterial wird zusammen mit den Fasern bei dem isostatischen Pressvorgang zu dem Bauteil verpresst. Das Matrixmaterial besteht bevorzugt aus Metallen mit hohem Schmelzpunkt, wie Eisen-, Titan- und Nickellegierungen. Als besonders günstig hat sich eine Kombination aus Siliziumcarbidfasern mit einem Matrixmaterial aus einer Titanlegierung erwiesen.

Die Verringerung des seitlichen Faserabstandes während des schraubenförmigen Verwindens des Faserbündels hat zum Vorteil, dass die Fasern erst in der Endposition einem erzwungenen Kontakt unterliegen. Hierdurch wird die Reibung zwischen den Fasern und damit die Kraft zur Durchführung des Verfahrens gering gehalten. Dies ist zur effektiven Umsetzung und zum Schutz vor Faserbeschädigung von Bedeutung, da zunächst die Fasern mit geringerer Packungsdichte in den Formhohlraum eingebracht werden. Außer der Möglichkeit, Fasern zu verwenden, die mit einem Matrixmaterial beschichtet sind, können auch Fasern ohne Matrixmaterial verarbeitet werden. Hierbei wird das Matrixmaterial oder Füllmaterial erst im Anschluss an das Merkmal b in den Formhohlraum injiziert.

Gemäß einer bevorzugten Ausführungsform des erfindungsgemäßen Verfahrens werden die Fasern an ihren Enden in Ringspalten lose geführt. Die Ringspalten bewirken eine örtliche Festlegung der Faserenden, ermöglichen aber das Schwenken der Fasern um das jeweilige Faserende herum, so dass die Faser sich im Winkel frei einstellen kann.

Vorzugsweise wird ein Haltering, der ein Ende des Faserbündels festhält, in einer Kombination aus Translation und Rotation relativ zu dem Formhohlraum bewegt. Das Verfahren kann mit einer rechnergesteuerten Vorrichtung ausgeführt werden, die die Rotations- und Translationsbewegungen programmgesteuert ausführt. Andererseits ist auch eine Führungsvorrichtung aus zusammengreifenden Führungselementen an einem Führungsteil für den Haltering und am Haltering möglich, wobei die Koordination der beiden Bewegungsarten nach Art einer Kulissensteuerung erfolgt.

Die Erfindung ermöglicht die Herstellung stabförmiger Bauteile mit schraubenförmig verlaufender Faserverstärkung. Stabförmige Bauteile können Rohre oder auch Stäbe sein. Es besteht auch die Möglichkeit, solche Bauteile, die gegenläufige Faserverstärkungen enthalten, ineinander zu stecken und miteinander zu verbinden.

Im folgenden werden unter Bezugnahme auf die Zeichnungen Ausführungsbeispiele der Erfindung näher erläutert.

Es zeigen:
- Fig. 1: einen Längsschnitt durch eine Vorrichtung zur Herstellung faserverstärkter Bauteile im leeren Zustand,
- Fig. 2: die Vorrichtung nach dem Einbringen des Faserbündels,
- Fig. 3: die Fixierung der oberen Faserenden an einem oberen Haltering,
- Fig. 4: die Durchführung der schraubenförmigen Bewegung des oberen Halteringes zum Zwecke der Schrägstellung der Fasern im Formhohlraum,
- Fig. 5: das Einbringen einer Führungshülse zur inneren Abstützung des rohrförmigen Faserbündels,
- Fig. 6: das Abdichten des Formhohlraums,
- Fig. 7: die Deformierung des Formhohlraums während des isostatischen Pressvorgangs,
- Fig. 8: das fertige Bauteil,
- Fig. 9: eine zweite Ausführungsform der Vorrichtung, wobei die Führungshülse mit dem unteren Haltering vereinigt ist, und
- Fig. 10: ein drittes Ausführungsbeispiel mit freier Rotationseinstellung des Faserbündels.

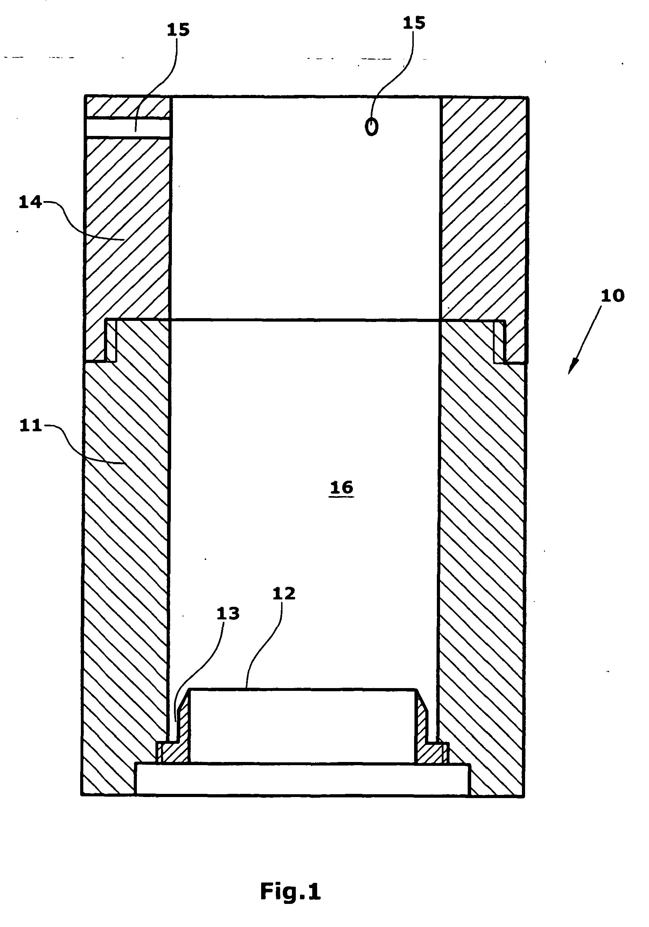

Bei dem Ausführungsbeispiel der Fig. 1 - 6 ist eine Form 10 vorgesehen, die einen aufrechtstehenden zylindrischen Außenmantel 11 aufweist, welcher an beiden Enden offen ist. In das untere Ende ist ein Haltering 12 eingeschraubt, wobei zwischen der Wand des Halteringes 12 und der Innenfläche des Außenmantels 11 ein Ringspalt 13 besteht, in den die unteren Enden der Fasern eingesetzt werden. Der Außenmantel 11 ist an seinem oberen Ende durch ein aufgeschraubtes zylindrisches Führungsteil 14 verlängert. Das Führungsteil 14 hat radiale Bohrungen 15 für stiftförmige Führungselemente. Die Innenflächen von Außenmantel 11 und Führungsteil 14 sind von.gleichem Durchmesser und Fluchten miteinander. Der Außenmantel 11 begrenzt den Formhohlraum 16.

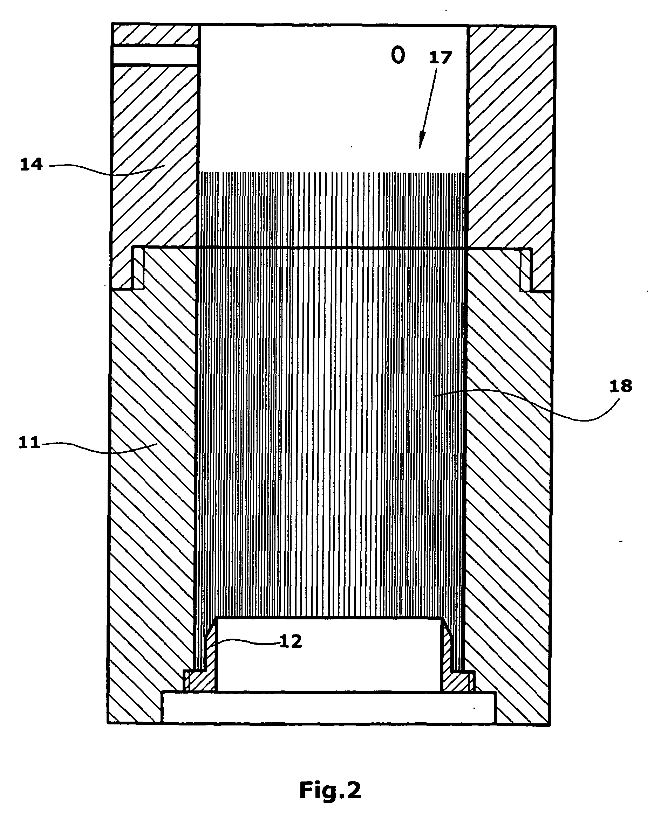

Fig. 2 zeigt den Zustand, dass in den Formhohlraum 16 ein Faserbündel 17 aus zahlreichen parallelen und gleich langen Fasern 18 eingebracht wurde. Die unteren Enden der Fasern 18 sitzen in dem Ringspalt 13. Von dort ragen die Fasern senkrecht auf, wobei sie ein ringförmiges Faserbündel bilden. Die Fasern 18 bestehen aus hochtemperaturbeständiger Keramik, insbesondere aus Siliziumcarbid. Die Fasern haben alle die gleiche vorbestimmte Länge und sind mit Matrixmaterial beschichtet. Bei einem Beispiel beträgt der Faserdurchmesser 140 µm und die Matrixbeschichtung besteht aus einer Titanlegierung, insbesondere Ti-6Al-4V mit einer Dicke von 30 µm. Daraus ergibt sich ein Gesamtdurchmesser der matrixbeschichteten Fasern von 200 µm. Die Fasern haben die erforderliche Biegesteifigkeit, so dass sie frei aufragend eine nahezu axiale Ausrichtung einnehmen.

Bei einer weiteren Ausführungsform werden die Fasern vor dem Einsetzen in den Formhohlraum (16) durch Hilfsfasern oder ein Bindemittel relativ zueinander fixiert werden, derart, dass die Fasern (18) ihre Winkelbeweglichkeit und somit ihre freie Ausrichtbarkeit beibehalten.

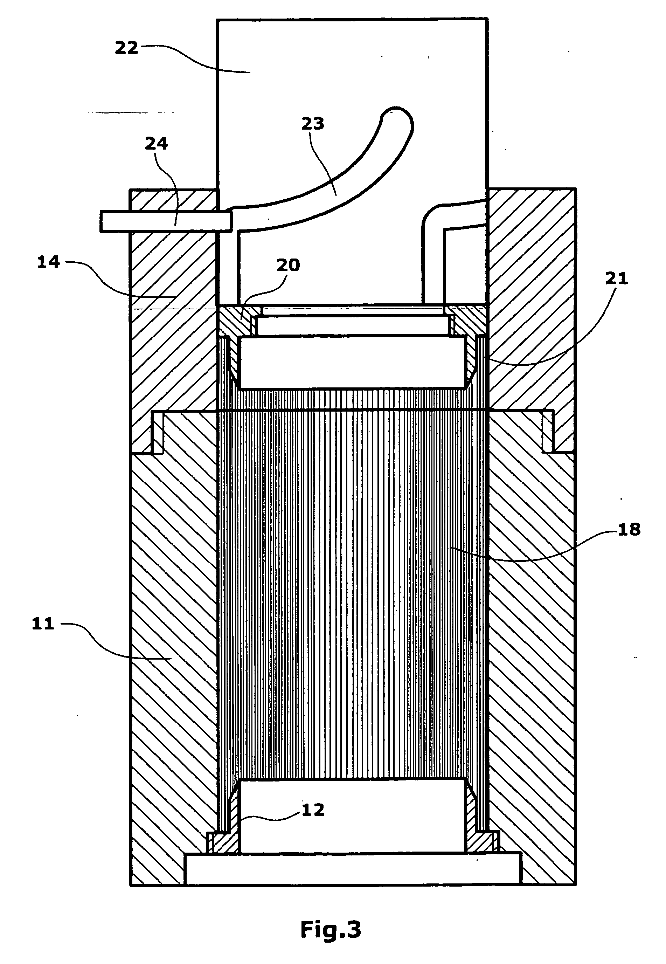

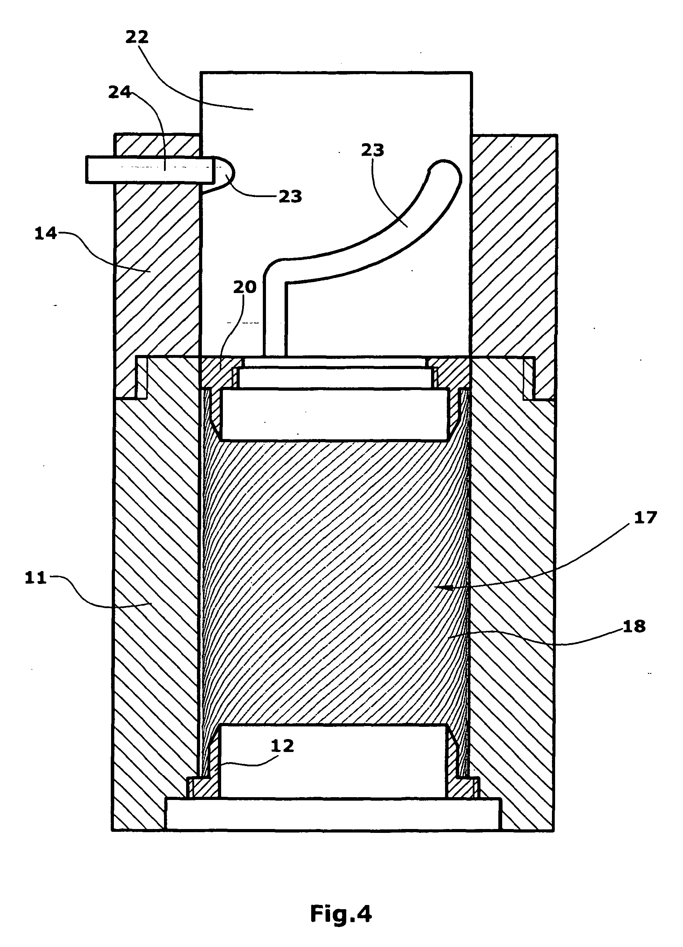

Gemäß Fig. 3 wird in das Führungsteil 14 der obere Haltering 20 eingesetzt, der ebenfalls mit der Innenfläche des Außenmantels 11 bzw. des Führungsteils 14 einen Ringspalt 21 bildet. Die oberen Enden der Fasern 18 ragen in das Führungsteil 14 hinein. Der obere Haltering 20 wird demnach so in das Führungsteil 14 eingeschoben, dass die oberen Faserenden von dem Ringspalt 21 aufgenommen werden. An dem Haltering 20 ist ein Stempel 22 befestigt. Dieser weist an seiner Umfangsfläche ausgebildete Führungselemente 23 auf, die mit Führungselementen 24 des Führungsteils 14 zusammenwirken. Die Führungselemente 23 sind Nuten und die Führungselemente 24 sind Stifte, die in die Bohrungen 15 eingesetzt sind und aus diesen heraus in die Nuten ragen. Die Führungselemente 23 und 24 wirken in der Weise zusammen, dass eine axiale Bewegung des Stempels 22 eine gleichzeitige Rotationsbewegung des Stempels bewirkt. Auf diese Weise wird auch der Haltering 20 sowohl translatorisch als auch gleichzeitig rotatorisch bewegt. Dies hat zur Folge, dass das Faserbündel 17 schraubenförmig verformt wird, wie dies in Fig. 4 dargestellt ist.

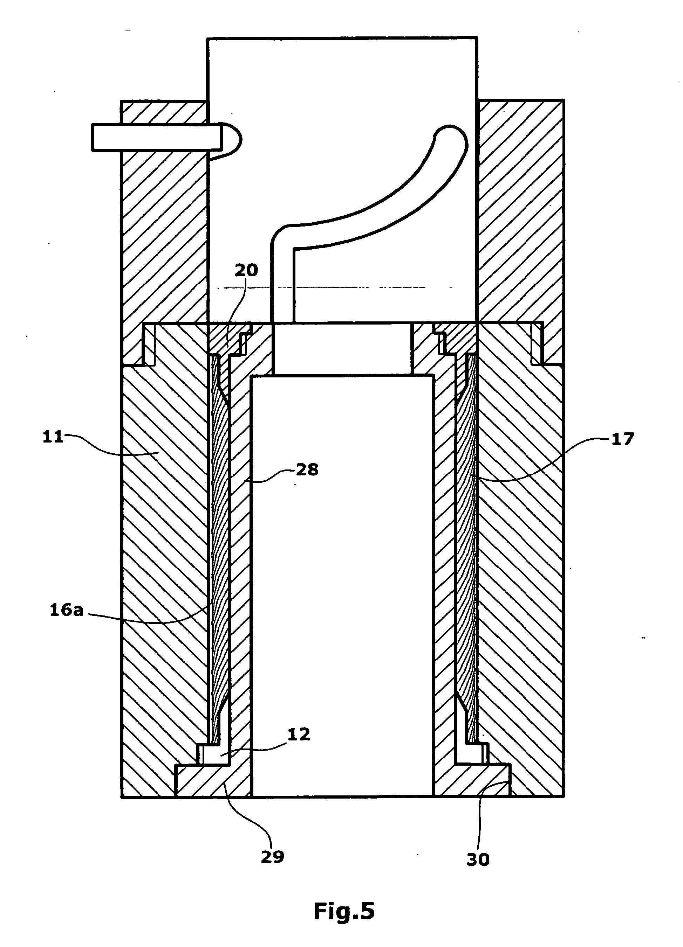

Gemäß Figur 5 wird zur Fixierung des oberen Halteringes 20 in Bezug auf den unteren Haltering 12 in Bezug auf den Außenmantel 11 eine Führungshülse 28 in das ringförmige Faserbündel 17 eingesetzt und mit dem Haltering 20 verschraubt. Die innere Führungshülse 28 hat an ihrem unteren Ende einen abstehenden Flansch 29, der in einer Ausnehmung 30 des Außenmantels 11 eintaucht und diese ausfüllt. Der Flansch 29 stützt sich an dem Außenmantel 11 und im unteren Haltering ab. Die Führungshülse 28 wird an beiden Enden von den Halteringen 12 und 20 zentriert gehalten. In diesem Zustand reduziert sich der Formhohlraum 16 auf den ringförmigen Hohlraum 16a zwischen Außenmantel 11 und Führungshülse 28.

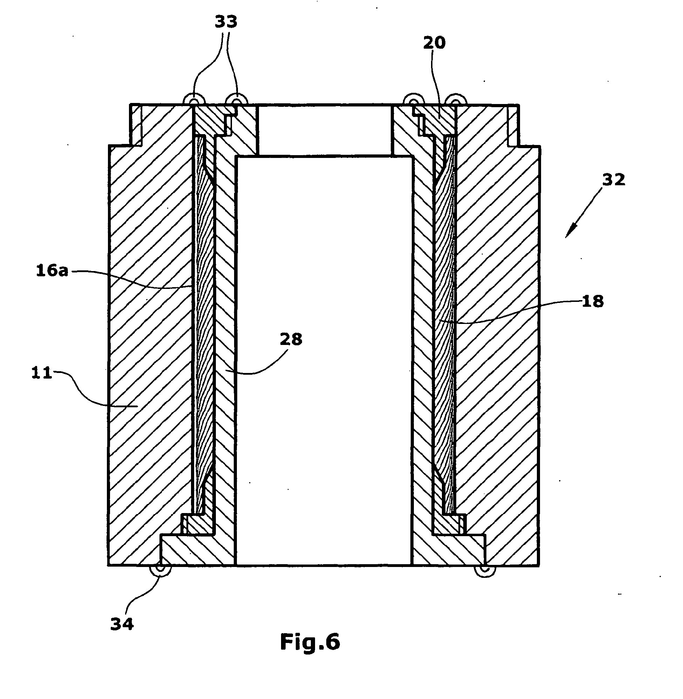

Durch die kombinierte Rotations- und Translationsbewegung ist der Haltering 20 von dem Führungsteil 14 aus in den Außenmantel 11 überführt worden. Nunmehr wird gemäß Fig. 6 das Führungsteil 14 entfernt, so dass der dargestellte Vorformling 32 aus Außenmantel 11, Führungshülse 28, Halteringen 12,20 und Fasern 18 entsteht. Dieser Vorformling wird zum Entgasen des Hohlraumes 16a in einen Vakuumraum gebracht. Unter Vakuum werden dann die Spalte mit gasdichten Schweißnähten 33,34 versiegelt, so dass der Hohlraum 16a dicht verschlossen ist. Der so verschlossene Vorformling wird heißisostatisch verpresst. Dies bedeutet, dass er mit einem Gas oder einer Flüssigkeit unter Druck gesetzt wird. Bei der in diesem Beispiel verwendeten Titanlegierung für die Matrix beträgt der Druck 150-200 MPa bei einer Temperatur von 920-980°C. Aufgrund der geringeren Wanddicke legt sich zunächst die innere Führungshülse 28 an die Fasern 18 an. Zugleich werden die matrixbeschichteten Fasern 18 zu einem festen Verbundwerkstoff verpresst und die Kontaktflächen der Einzelteile des Vorformlings werden diffusionsverschweißt entsprechend der Darstellung in Fig. 7.

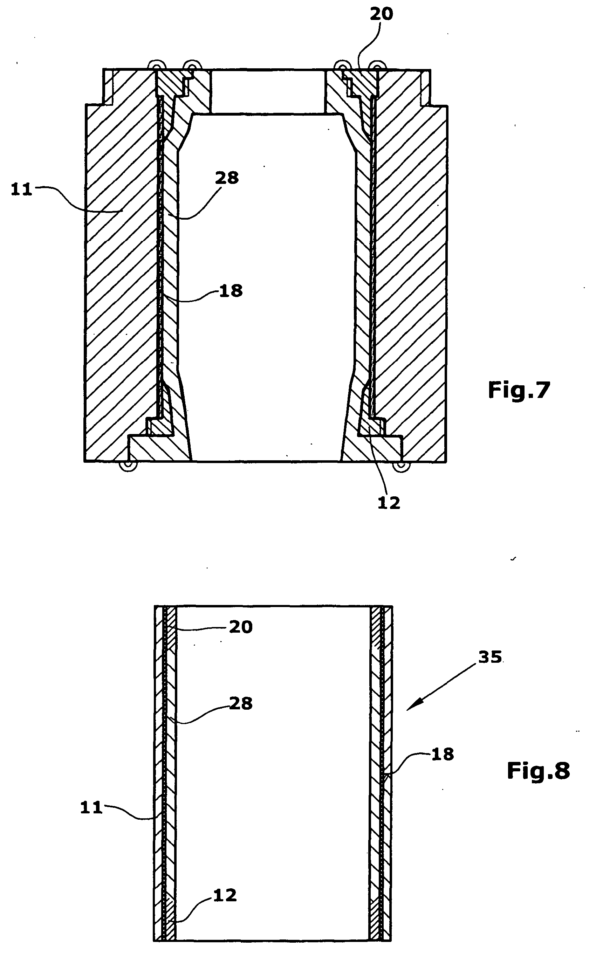

In Fig. 8 ist das stabförmige Bauteil 35 dargestellt, welches das Endprodukt bildet. Durch spanende Bearbeitung sind die äußeren Teile des Außenmantels 11 und die inneren Teile der Führungshülse 28 sowie der Halteringe 12 und 20 bis auf ein Mindestmaß entfernt worden, so dass ein Rohr mit zylindrischen Innen- und Außenflächen entstanden ist, bei dem die Rohrwand eingebettete Verstärkungsfasern 18 von schraubenförmigen bzw. wendelförmigem Verlauf enthält.

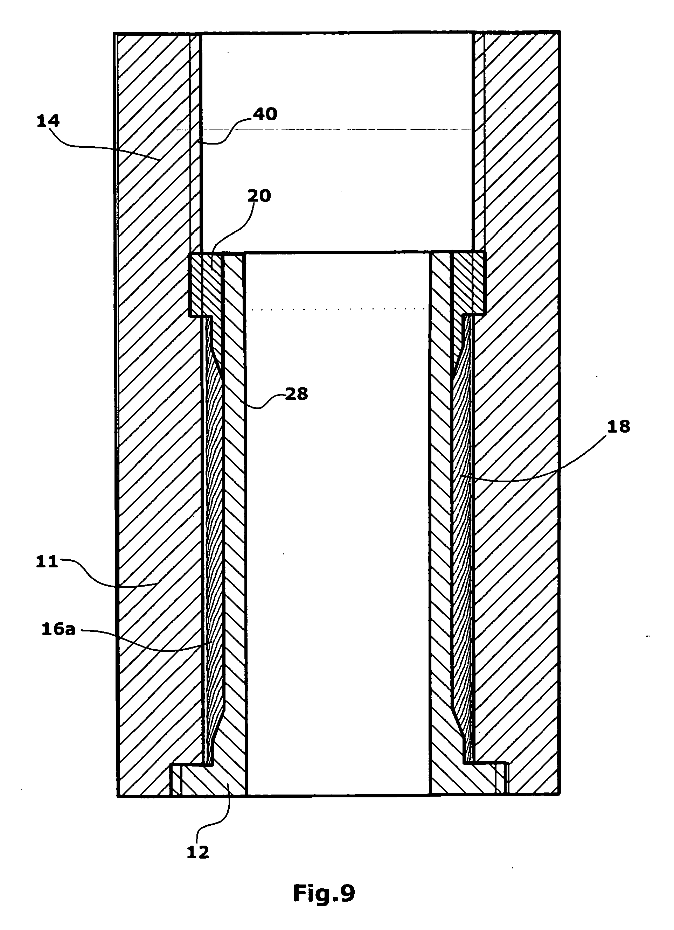

Fig. 9 zeigt ein Ausführungsbeispiel, bei dem die innere Führungshülse 28 dem einen Haltering 12 einstückig angeformt ist. Wie bei dem ersten Ausführungsbeispiel hat der Hohlraum 16a im Bereich zwischen den Halteringen 12 und 20 eine größere Breite, um die Reibung der Fasern im mittleren Längenbereich gering zu halten. Aufgrund der Bestrebung der Fasern 18, eine geradlinige Form einzunehmen, entsteht eine Kraft, die zum einen die Halteringe 12 und 20 axial auseinander drückt und zum anderen dafür sorgt, dass die Fasern an dem Außenmantel 11 anliegen.

Die Kopplung aus Translation und Rotation erfolgt bei dem Ausführungsbeispiel von Fig. 9 durch ein Innengewinde 40 im Führungsteil 14. In dieses Innengewinde greift ein Außengewinde des Halteringes 20 ein. Die beiden Gewinde haben eine hohe Steigung. Das Führungsteil 14 ist bei diesem Ausführungsbeispiel Bestandteil des Außenmantels 11.

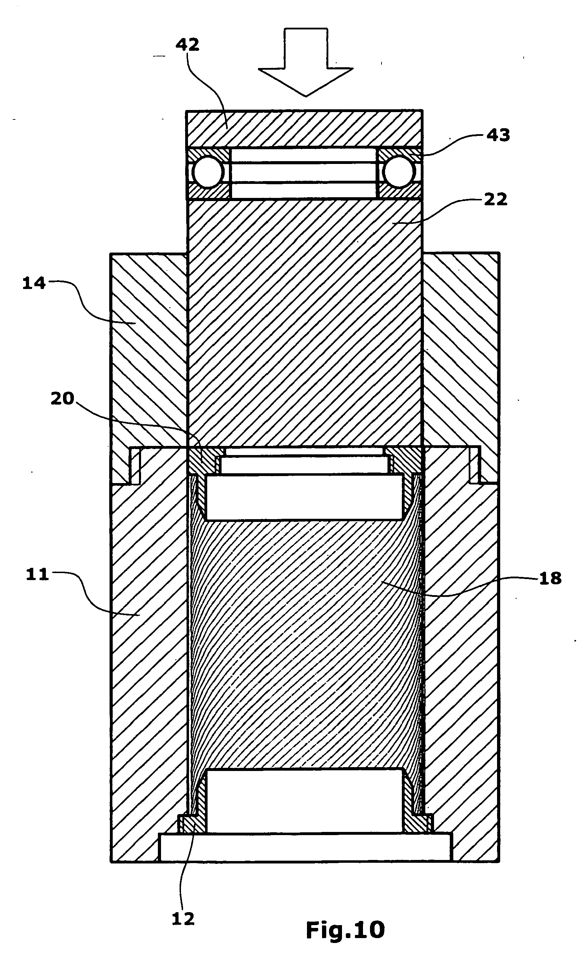

Fig. 10 zeigt ein weiteres Ausführungsbeispiel. Hierbei ist auf den Außenmantel 11 das Führungsteil 14 aufgeschraubt. Das Führungsteil 14 enthält wie bei dem ersten Ausführungsbeispiel einen Stempel 22, der gegen den oberen Haltering 20 drückt. Ein Drückorgan 42 drückt über ein Axialkugellager 43 axial gegen den Stempel 22. Dadurch wird auf die Fasern 18 eine axiale Kraft ausgeübt. Wegen einer geringen Vororientierung der Fasern drehen diese den Haltering 20 und somit auch den Stempel 22. Hierbei erfolgt keine Zwangssteuerung der Beziehung zwischen translatorischer und rotatorischer Bewegung, sondern eine freie Rotationsbewegung unter der Wirkung der Fasern 18.

Bei den beschriebenen Ausführungsbeispielen sind die Fasern 18 mit einem Matrixmaterial umhüllt, das beim heißisostatischen Pressen weich wird und gewissermaßen verbackt und sich auch mit dem Außenmantel 11 und der Führungshülse 28 fest verbindet. Alternativ besteht die Möglichkeit, Fasern ohne Matrixmaterial zu verwenden und das Matrixmaterial nach Art eines Spritzgussverfahrens in den Formhohlraum zu injizieren.

## Patentansprüche

1. Verfahren zur Herstellung eines faserverstärkten rotationssymetrischen stabförmigen Bauteils mit den Schritten
a) Einbringen eines Faserbündels (17) aus zahlreichen Fasern (18) in einen langgestreckten Formhohlraum (16), wobei die Fasern axial zu dem Formhohlraum ausgerichtet werden, **gekennzeichnet durch**
b) schraubenförmiges Verwinden des Faserbündels (17) unter Verkleinerung des axialen Abstandes der Enden des Faserbündels, wodurch die seitlichen Abstände der Fasern (18) verringert werden,
c) abdichtendes Verschließen des die Fasern und ein Matrixmaterial enthaltenden Formhohlraums,
d) Beaufschlagung des Formhohlraums von außen mit isostatischem Druck zum Verdichten des Faserbündels unter Verpressung der Fasern mit dem Matrixmaterial.

2. Verfahren nach Anspruch 1, wobei die Fasern (18) mit dem Matrixmaterial beschichtet sind.

3. Verfahren nach Anspruch 1, wobei das Matrixmaterial in den Formhohlraum injiziert wird.

4. Verfahren nach einem der Ansprüche 1 - 3, wobei im Schritt
a) die Fasern (18) an ihren Enden in Ringspalten (13) lose geführt werden.

5. Verfahren nach einem der Ansprüche 1 - 4, wobei im Schritt b) ein Haltering (20) in einer Kombination aus Translation und Rotation relativ zu einem Außenmantel (11) bewegt wird.

6. Verfahren nach einem der Ansprüche 1 - 5, wobei die Fasern (18) an mindestens einer Stelle ihrer Länge vor dem Einsetzen in den Formhohlraum (16) durch Hilfsfasern oder ein Bindemittel relativ zueinander fixiert werden, derart, dass die Fasern (18) ihre Winkelbeweglichkeit und somit ihre freie Ausrichtbarkeit beibehalten.

7. Verfahren nach einem der Ansprüche 1 - 6, wobei vor dem Schritt c) der Formhohlraum evakuiert wird.

8. Verfahren nach einem der Ansprüche 1 - 7, wobei in das Faserbündel (17) eine Führungshülse (28) eingesetzt wird, die den Formhohlraum begrenzt.

9. Verfahren nach Anspruch 8, wobei die Führungshülse (28) mindestens teilweise in dem fertigen Bauteil (35) verbleibt.

10. Vorrichtung zur Herstellung eines faserverstärkten rotationssymmetrischen stabförmigen Bauteils, mit einer Form, die einen langgestreckten Formhohlraum (16) umschließt **dadurch gekennzeichnet, dass**, an den Enden des Formhohlraums (16) Halteringen (12,20) zur Fixierung der Enden der Fasern (18), angeordnet sind, und an mindestens einem Ende des Formhohlraums (16) ein Führungsteil (14) für den einen Haltering (20) befestigt ist, wobei der Haltering in dem Führungsteil drehbar und gleichzeitig längs verschiebbar ist.

11. Vorrichtung nach Anspruch 10, **dadurch gekennzeichnet, dass** das Führungsteil (14) und der Haltering (20) zusammengreifende Führungselemente (23,24) für die Koordination von Drehung und Längsbewegung des Halteringes (20) aufweisen.

12. Vorrichtung nach Anspruch 10 oder 11, **dadurch gekennzeichnet, dass** ein linear angetriebenes Druckorgan (42) vorgesehen ist, das über ein Axiallager (43) gegen den einen Haltering (20) drückt, wobei dieser Haltering sich unter der Einwirkung der an ihm geführten Fasern (18) frei dreht.

13. Vorrichtung nach einem der Ansprüche 10 - 12, **dadurch gekennzeichnet, dass** der Formhohlraum innen und/oder außen durch eine Führungshülse (28) begrenzt ist, die als verlorenes Formteil Bestandteil des herzustellenden Bauteils (35) wird.

## Claims

1. A method for manufacturing a fiber-reinforced rotation-symmetric bar-shaped component, comprising the following steps:
a) introducing a fiber bundle (17) of a plurality of fibers (18) into an elongate mold cavity (16), the fibers being oriented axial to the mold cavity,
b) helically twisting the fiber bundle (17) while reducing the axial distance between the ends of the fiber bundle, whereby the lateral distances of the fibers (18) are reduced,
c) sealingly closing the mold cavity including said fibers and a matrix material,
d) pressurizing the mold cavity from outside with an isostatic pressure to compact the fiber bundle while pressing the fibers into the matrix material.

2. The method of claim 1, wherein the fibers (18) are coated with said matrix material.

3. The method of claim 1, wherein the matrix material is injected into the mold cavity.

4. The method of one of claims 1-3, wherein in step a) the ends of the fibers (18) are guided loosely in annular gaps (13).

5. The method of one of claims 1 - 4, wherein in step b) retaining ring (20) is moved in a combination of translation and rotation relative to an outer shell (11).

6. The method of one of claims 1-5, wherein, prior to being inserted into the mold cavity (16), the fibers (18) are fixed relative to each other by auxiliary fibers or a binding agent at at least one point along their length, such that the fibers (18) maintain their angular mobility and thus their free orientability.

7. The method of one of claims 1-6, wherein the mold cavity is evacuated prior to step c).

8. The method of one of claims 1-7, wherein a guide bushing (28) is inserted into the fiber bundle (17), which defines the mold cavity.

9. The method of claim 8, wherein the guide bushing (28) remains at least partly in the finished component (35).

10. A device for manufacturing a fiber-reinforced rotation-symmetric bar-shaped component, comprising a mold enclosing an elongate mold cavity (16), **characterized in that** retaining rings (12, 20) are arranged at the ends of the mold cavity (16) for fixing the ends of the fibers (18), and at at least one end of the mold cavity (16), a guide member (14) for the one retaining ring (20) is mounted, the retaining ring being both turnable and displaceable in the longitudinal direction in said guide member.

11. The device of claim 10, **characterized in that** the guide member (14) and the retaining ring (20) comprise cooperating guide elements (23, 24) for coordinating the rotation and the longitudinal movement of the retaining ring (20).

12. The device of claim 10 or 11, **characterized in that** a linearly driven pressing element (42) is provided pressing against the one retaining ring (20) via an axial bearing (43), said one retaining ring rotating freely under the action of the fibers (18) guided at the same.

13. The device of one of claims 10 - 12, **characterized in that** the mold cavity is defined on the inside and/or the outside by a guide bushing (28) which, as a lost mold part, becomes a part of the component (35) to be manufactured.

## Revendications

1. Procédé pour fabriquer une pièce en forme de tige à symétrie de révolution, renforcée par des fibres, comprenant les étapes de
a) introduction d'un faisceau de fibres (17), constitué d'un grand nombre de fibres (18), dans une cavité de moulage allongée (16), les fibres étant alors orientées en direction axiale par rapport à la cavité de moulage, **caractérisé par**
b) un torsadage hélicoïdal du faisceau de fibres (17) avec diminution de la distance, en direction axiale, entre les extrémités du faisceau de fibres, grâce à quoi les écartements latéraux des fibres (18) sont réduits,
c) la fermeture étanche de la cavité de moulage renfermant les fibres ainsi qu'un matériau formant matrice,
d) l'exposition de la cavité de moulage, depuis l'extérieur, à une pression isostatique, en vue du compactage du faisceau de fibres avec compression des fibres avec le matériau formant matrice.

2. Procédé selon la revendication 1, suivant lequel les fibres (18) sont enrobées du matériau formant matrice.

3. Procédé selon la revendication 1, suivant lequel le matériau formant matrice est injecté dans la cavité de moulage.

4. Procédé selon l'une des revendications 1 à 3, suivant lequel, à l'étape a), les fibres (18) sont, à leurs extrémités, guidées de façon lâche dans des fentes annulaires (13).

5. Procédé selon l'une des revendications 1 à 4, suivant lequel, à l'étape b), une bague de retenue (20) est déplacée par rapport à une paroi latérale extérieure (11), selon une combinaison d'une translation et d'une rotation.

6. Procédé selon l'une des revendications 1 à 5, suivant lequel les fibres (18) sont, avant l'insertion dans la cavité de moulage (16), immobilisées les unes par rapport aux autres, en au moins un point de leur longueur, par des fibres auxiliaires ou un liant, ceci d'une manière telle, que les fibres (18) conservent leur mobilité angulaire et, par conséquent, leur liberté d'orientation.

7. Procédé selon l'une des revendications 1 à 6, suivant lequel, avant l'étape c), le vide est établi dans la cavité de moulage.

8. Procédé selon l'une des revendications 1 à 7, suivant lequel est inséré dans le faisceau de fibres (17), un manchon-guide (28), qui délimite la cavité de moulage.

9. Procédé selon la revendication 8, suivant lequel le manchon-guide (28) demeure, au moins pour partie, dans la pièce finie (35).

10. Dispositif pour la fabrication d'une pièce en forme de tige à symétrie de révolution, renforcée par des fibres, comprenant un moule, qui enferme une cavité de moulage (16) allongée, **caractérisé en ce qu'**aux extrémités de la cavité de moulage (16), sont disposées des bagues de retenue (12, 20) destinées à immobiliser les extrémités des fibres (18), et à au moins une extrémité de la cavité de moulage (16), est fixée une pièce de guidage (14) pour l'une (20) des bagues de retenue, la bague de retenue étant mobile en rotation et, en même temps, déplaçable en translation longitudinale, dans la pièce de guidage.

11. Dispositif selon la revendication 10, **caractérisé en ce que** la pièce de guidage (14) et la bague de retenue (20) présentent des éléments de guidage (23, 24) s'engageant l'un dans l'autre, pour la coordination de la rotation et du déplacement longitudinal de la bague de retenue (20).

12. Dispositif selon la revendication 10 ou 11, **caractérisé en ce qu'**il est prévu un organe pousseur (42) mû linéairement, qui pousse contre l'une (20) des bagues de retenue par l'intermédiaire d'un palier axial (43), cette bague de retenue tournant alors librement sur elle-même sous l'action des fibres (18) guidées contre elle.

13. Dispositif selon l'une des revendications 10 à 12, **caractérisé en ce que** la cavité de moulage est délimitée intérieurement et/ou extérieurement par un manchon-guide (28), lequel devient, en tant qu'élément perdu du moule, une partie constitutive de la pièce à fabriquer (35).
